# EUROPEAN PATENT APPLICATION

(11) **EP 4 810 847 A1**
(43) Date of publication of application: **23.09.2026**
(21) Application number: 25838423.9
(22) Date of filing: 22.09.2025
(51) Int. Cl.: F16L 41/02, F16L 13/08, F16L 17/02, F25B 41/42

(54) **BRANCH PIPE AND REFRIGERATION DEVICE**

(30) Priority: 30.01.2025 JP 2025013882
(71) Applicant: DAIKIN INDUSTRIES, LTD., Osaka-Shi, Osaka 530-0001 (JP)
(72) Inventor: ONO, Asahi, Osaka-shi, Osaka 5300001 (JP); ASHIDA, Keishi, Osaka-shi, Osaka 5300001 (JP); KOIKE, Fumiaki, Osaka-shi, Osaka 5300001 (JP)
(74) Representative: Hoffmann Eitle
(86) International application number: PCT/JP2025/033331
(87) International publication number: WO 2026/163509

(57) **Abstract**

A branch pipe 10 includes a branch pipe main body 20 configured to include a first plate-shaped member 21 made of stainless steel having a first surface 21a and a second plate-shaped member 22 made of stainless steel having a second surface 22a, in which the branch pipe main body 20 includes a joint portion 24, a flow path 25 formed between the first surface 21a and the second surface 22a, and a first opening 26a, a second opening 26b, and a third opening 26c which are formed by the first plate-shaped member 21 and the second plate-shaped member 22 at an end in a flow direction of fluid in the flow path 25 and communicate with the first pipe 111, the second pipe 112, and the third pipe 113, respectively.

## Description

### TECHNICAL FIELD

The present disclosure relates to a branch pipe and a refrigeration apparatus.

### BACKGROUND ART

Conventionally, a plate-type refrigerant pipe formed by bonding a stainless steel plate and connecting a coupling pipe perpendicularly to a plate surface is known (see Patent Literature 1).

### CITATION LIST

### [PATENT LITERATURE]

PATENT LITERATURE 1: Japanese Laid-Open Patent Publication No. 2021-071269

### SUMMARY OF THE INVENTION

### [TECHNICAL PROBLEM]

Since the plate-type refrigerant pipe needs to be subjected to burring when forming a connection portion for connecting the coupling pipe, processing difficulty is high. For this reason, it is difficult to produce a branch pipe that branches the flow of the refrigerant in the plate-type refrigerant pipe.

An object of the present disclosure is to obtain a branch pipe made of stainless steel by simple processing.

### [SOLUTION TO PROBLEM]

(1) A branch pipe of the present disclosure is a branch pipe that connects a first pipe, a second pipe, and a third pipe and branches a fluid flowing through the first pipe into the second pipe and the third pipe, the branch pipe including a branch pipe main body configured to include a first plate-shaped member made of stainless steel and having a first surface, and a second plate-shaped member made of stainless steel and having a second surface disposed opposite to the first surface, in which the branch pipe main body includes a joint portion that joins the first plate-shaped member and the second plate-shaped member, a flow path formed between the first surface and the second surface, and a first opening, a second opening, and a third opening which are formed by the first plate-shaped member and the second plate-shaped member at an end in a flow direction of the fluid in the flow path and communicate with the first pipe, the second pipe, and the third pipe, respectively.

In the branch pipe of the present disclosure, a stainless steel branch pipe can be obtained by subjecting a stainless steel plate to simple processing.

(2) Preferably, the branch pipe according to (1) of the present disclosure further includes a first pipe joint including a first joint portion connectable to the first pipe at a first end in an axial direction and having a second end in the axial direction connected to the first opening, a second pipe joint including a second joint portion connectable to the second pipe at a first end in the axial direction and having a second end in the axial direction connected to the second opening, and a third pipe joint including a third joint portion connectable to the third pipe at a first end in the axial direction and having a second end in the axial direction connected to the third opening, in which the joint portion includes a branch portion formed between the second opening and the third opening, and a formation length of the branch portion in an outflow direction of the fluid flowing through the second opening and the third opening is larger than an insertion margin of the second pipe joint in the second opening and an insertion margin of the third pipe joint in the third opening.

In the branch pipe having the above configuration, pressure resistance performance can be secured by making the formation length of the branch portion larger than the insertion margin of the second pipe joint and the third pipe joint. Further, the branch pipe of the present disclosure can reliably rectify the fluid flowing from the first pipe to the second pipe and the third pipe by making the formation length of the branch portion larger than the insertion margins of the second pipe joint and the third pipe joint.

(3) Preferably, in the branch pipe of (2) of the present disclosure, a separation distance between the second opening and the third opening is larger than a thickness of the branch portion.

In the branch pipe having the above configuration, insertion margins of the second pipe joint and the third pipe joint can be secured in the second opening and the third opening.

(4) Preferably, in the branch pipe according to any one of the aspects (1) to (3) of the present disclosure, the branch pipe main body further includes a sealing portion that seals a gap between an outer peripheral surface of the first pipe joint and the first opening, a gap between an outer peripheral surface of the second pipe joint and the second opening, and a gap between an outer peripheral surface of the third pipe joint and the third opening.

In the branch pipe having the above configuration, a stainless steel branch pipe can be obtained by subjecting a stainless steel plate to simple processing.

(5) Preferably, in the branch pipe according to the aspect (4) of the present disclosure, the sealing portion includes a brazing material layer that connects the branch pipe main body and the first pipe joint, the second pipe joint, and the third pipe joint.

In the branch pipe having the above configuration, leakage of the fluid from the gap between the branch pipe main body and each pipe joint can be suppressed by the brazing material layer connecting the branch pipe main body and each of the pipe joints.

(6) Preferably, in the branch pipe according to the aspect (4) or (5) of the present disclosure, the sealing portion includes an end plate disposed on at least one of an end in an axial direction of the first opening of the branch pipe main body, an end in the axial direction of the second opening of the branch pipe main body, or an end in the axial direction of the third opening of the branch pipe main body.

In the branch pipe having the above configuration, since the sealing portion includes the end plate, the amount of the brazing material used for sealing the gap between each of the first to third openings and each pipe joint can be suppressed, and the end plate can suppress the leakage of the fluid from the gap between the branch pipe main body and each of the pipe joints.

(7) Preferably, in the branch pipe according to the aspect (5) of the present disclosure, the sealing portion includes an insert disposed in at least any one of the gap between the outer peripheral surface of the first pipe joint and the first opening, the gap between the outer peripheral surface of the second pipe joint and the second opening, and the gap between the outer peripheral surface of the third pipe joint and the third opening.

In the branch pipe of the present disclosure, by configuring the sealing portion to include an insert other than the brazing material, the gap between each of the first to third openings and each of the pipe joints can be reduced, whereby the amount of the brazing material used for sealing the gap can be suppressed, and the leakage of the fluid from the gap between the branch pipe main body and each of the pipe joints can be suppressed.

(8) Preferably, in the branch pipe according to the aspect (5) of the present disclosure, at least one of the first pipe joint, the second pipe joint, or the third pipe joint includes a protrusion bulging toward the gap.

In the branch pipe of the present disclosure, by providing the protrusion bulging toward the joint portion in at least one of the first to third pipe joints, the gap between each of the first to third openings and each of the pipe joints can be reduced, whereby the amount of the brazing material used for sealing the gap can be suppressed, and the leakage of the fluid from the gap between the branch pipe main body and each of the pipe joints can be suppressed.

(9) Preferably, in the branch pipe according to the aspect (5) of the present disclosure, the branch pipe main body further includes a third plate-shaped member, the first surface and the second surface are joined to each other via the third plate-shaped member at the joint portion, and the third plate-shaped member includes a protruding portion that protrudes from the joint portion to at least one of the first opening, the second opening, or the third opening.

In the branch pipe of the present disclosure, by providing the protruding portion of the third plate-shaped member in the sealing portion, the gap between each of the first to third openings and each of the pipe joints can be reduced, whereby the amount of the brazing material used for sealing the gap can be suppressed, and the leakage of the fluid from the gap between the branch pipe main body and each of the pipe joints can be suppressed.

(10) Preferably, in the branch pipe according to the aspect (5) of the present disclosure, at least one of the first opening, the second opening, and the third opening includes a machined portion subjected to machining, and the machined portion when viewed from the axial direction has inflection points at which a change in a tangential direction is discontinuous.

In the branch pipe of the present disclosure, by providing the machined portion, the gap between each of the first to third openings and each of the pipe joints can be reduced, whereby the amount of the brazing material used for sealing the gap can be suppressed, and the leakage of the fluid from the gap between the branch pipe main body and each of the pipe joints can be suppressed.

(11) Preferably, in the branch pipe according to any one of the aspects (1) to (10) of the present disclosure, the first pipe, the second pipe, and the third pipe are refrigerant pipes through which a single refrigerant made of carbon dioxide or a mixed refrigerant containing carbon dioxide flows.

The branch pipe of the present disclosure can be used in a refrigerant pipe for a single refrigerant made of carbon dioxide having a higher pressure than that of a conventional refrigerant or for a mixed refrigerant containing carbon dioxide.

(12) A refrigeration apparatus of the present disclosure includes the branch pipe according to any one of the aspects (1) to (11).

In the refrigeration apparatus of the present disclosure, a branch pipe obtained by subjecting a stainless steel plate to simple processing can be used to easily configure the refrigeration apparatus including a refrigerant circuit having a higher pressure than a conventional refrigerant circuit.

### BRIEF DESCRIPTION OF DRAWINGS

[FIG. 1] FIG. 1 is a schematic diagram of a refrigeration apparatus according to an embodiment of the present disclosure.
[FIG. 2] FIG. 2 is a schematic perspective view schematically illustrating a branch pipe according to an embodiment of the present disclosure.
[FIG. 3] FIG. 3 is a schematic cross-sectional view illustrating a branch pipe according to an embodiment of the present disclosure.
[FIG. 4] FIG. 4 is an explanatory view of a branch pipe according to a first embodiment.
[FIG. 5] FIG. 5 is an explanatory view of a branch pipe according to a second embodiment.
[FIG. 6] FIG. 6 is an explanatory view of a branch pipe according to a third embodiment.
[FIG. 7A] FIG. 7A is an explanatory view of a branch pipe according to a fourth embodiment.
[FIG. 7B] FIG. 7B is an explanatory view of a branch pipe according to the fourth embodiment.
[FIG. 8A] FIG. 8A is an explanatory view of a branch pipe according to a fifth embodiment.
[FIG. 8B] FIG. 8B is an explanatory view of a branch pipe according to the fifth embodiment.

### DETAILED DESCRIPTION

Hereinafter, a branch pipe of the present disclosure and a refrigeration apparatus including the branch pipe will be described in detail with reference to the accompanying drawings. Note that the present disclosure should not be limited to the following exemplifications, and is intended to include any modification recited in the claims within meanings and a scope equivalent to those of the claims.

### [Entire configuration of refrigeration apparatus]

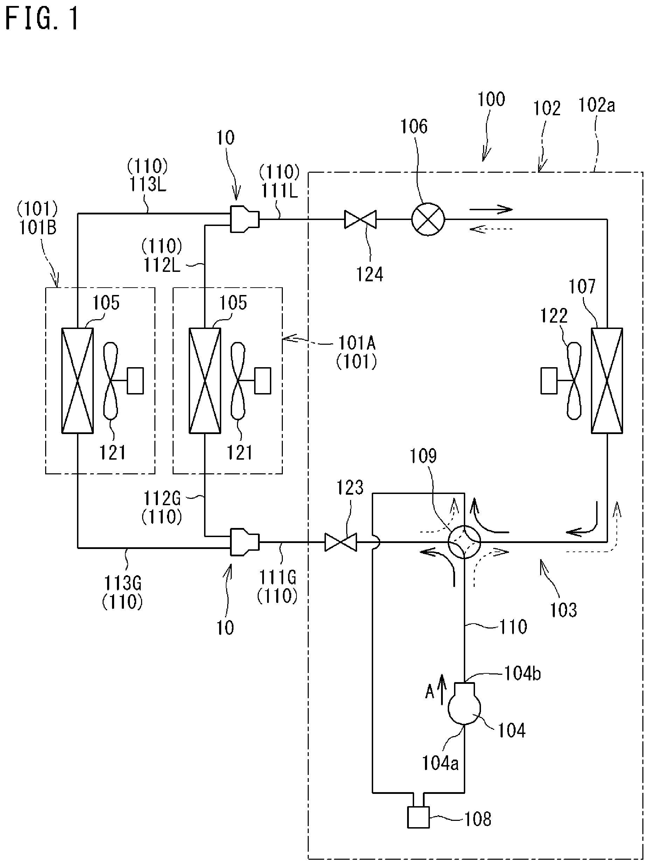

FIG. 1 is a schematic diagram of a refrigeration apparatus according to an embodiment of the present disclosure. The refrigeration apparatus 100 according to the present embodiment is an air conditioner that adjusts temperature and humidity in an air-conditioned room by a vapor compression refrigeration cycle. The refrigeration apparatus 100 includes a plurality of (two in the present embodiment) indoor units 101 installed indoors and an outdoor unit 102 installed outdoors. The indoor units 101 and the outdoor unit 102 are connected to each other by refrigerant pipes 110. The indoor units 101 include a first indoor unit 101 (hereinafter also referred to as a first indoor unit 101A) and a second indoor unit 101 (hereinafter also referred to as a second indoor unit 101B). Note that although the present embodiment illustrates the refrigeration apparatus 100 including the two indoor units 101, the refrigeration apparatus 100 of the present disclosure may include three or more indoor units 101.

The refrigeration apparatus 100 includes a refrigerant circuit 103 that executes a vapor compression refrigeration cycle. The refrigerant circuit 103 includes a plurality of element components and refrigerant pipes 110 connecting the plurality of element components. Each refrigerant pipe 110 includes a branch pipe 10 of the present disclosure. Note that the configuration of the branch pipe 10 will be described later in detail.

The refrigerant circuit 103 includes, as a plurality of element parts, a compressor 104 that compresses a refrigerant to generate a high-temperature and high-pressure gas refrigerant, a plurality of indoor heat exchangers 105, an expansion valve 106 that decompresses the refrigerant, an outdoor heat exchanger 107, an accumulator 108, a four-way switching valve 109, and the like, which are connected by the refrigerant pipe 110.

The refrigeration apparatus 100 of the present disclosure uses, as the refrigerant, a single refrigerant made of carbon dioxide or a mixed refrigerant containing carbon dioxide (so-called natural refrigerant). The refrigerant flowing in the refrigerant circuit 103 has a pressure of 4.0 MPa or more (for example, about 8 to 14 MPa). Therefore, the refrigerant pipe 110 and the branch pipe 10 used in the refrigeration apparatus 100 have strength enough to withstand a pressure of 4.0 MPa or more. The refrigerant pipe 110 and the branch pipe 10 used in the refrigeration apparatus 100 are made of stainless steel, and have higher pressure resistance strength than, for example, a refrigerant pipe and a branch pipe used in a refrigerant circuit using a conventional refrigerant (for example, R32, R410A, and the like).

The compressor 104 compresses a low-pressure gas refrigerant and discharges a high-pressure gas refrigerant. The compressor 104 has a suction port or a suction portion 104a and a discharge port or a discharge portion 104b. The low-pressure gas refrigerant is suctioned through the suction portion 104a. The high-pressure gas refrigerant is discharged through the discharge portion 104b in the direction of arrow A. Examples of the compressor 104 include various compressors such as a scroll compressor. The compressor 104 is housed in a casing 102a of the outdoor unit 102. The accumulator 108 is provided on the refrigerant pipe 110 on the suction side of the compressor 104.

The indoor heat exchanger 105 is provided in an indoor unit 101 and executes heat exchange between a refrigerant and indoor air. Examples of the indoor heat exchanger 105 include a fin-and-tube heat exchanger of a cross-fin type and a heat exchanger of a microchannel type. An indoor fan 121 is disposed near the indoor heat exchanger 105. The indoor fan 121 blows indoor air to the indoor heat exchanger 105 and sends conditioned air into the room.

The expansion valve 106 is disposed in the refrigerant pipe 110 between the outdoor heat exchanger 107 and the indoor heat exchangers 105. The expansion valve 106 expands the passing refrigerant to decompress the refrigerant to a predetermined pressure. The expansion valve 106 of the present embodiment is an electronic expansion valve.

The outdoor heat exchanger 107 executes heat exchange between the refrigerant and outdoor air. Examples of the outdoor heat exchanger 107 include a fin-and-tube heat exchanger of a cross-fin type and a heat exchanger of a microchannel type. An outdoor fan 122 is disposed near the outdoor heat exchanger 107. The outdoor fan 122 blows outdoor air to the outdoor heat exchanger 107.

The refrigerant pipe 110 is provided with the four-way switching valve 109 for switching a refrigerant flow path, a gas shutoff valve 123, and a liquid shutoff valve 124. By switching the four-way switching valve 109, the refrigeration apparatus 100 can reverse a flow of the refrigerant, and switch the refrigerant discharged from the compressor 104 to be supplied to the outdoor heat exchanger 107 or the indoor heat exchanger 105, and thus an operation can be switched between a cooling operation and a heating operation.

The gas shutoff valve 123 and the liquid shutoff valve 124 open or close the refrigerant path. The opening and closing are performed manually, for example. When the refrigeration apparatus 100 is installed, the gas shutoff valve 123 and the liquid shutoff valve 124 are closed to prevent the refrigerant enclosed in the outdoor unit 102 from leaking outside, for example. On the other hand, when the refrigeration apparatus 100 is used, the gas shutoff valve 123 and the liquid shutoff valve 124 are opened.

During the heating operation of the refrigeration apparatus 100, by switching the four-way switching valve 109 as indicated by a solid line, the refrigerant flows in a direction indicated by an arrow of the solid line. As a result, the high-pressure gas refrigerant discharged from the compressor 104 in the direction of arrow A passes through the four-way switching valve 109, then passes through the gas shutoff valve 123 that is opened, and then enters the indoor heat exchanger 105. The high-pressure gas refrigerant radiates heat while the high-pressure gas refrigerant turns into a high-pressure liquid refrigerant in the indoor heat exchanger 105. The high-pressure liquid refrigerant reaches the expansion valve 106 via the liquid shutoff valve 124 that is opened, and is decompressed by the expansion valve 106. The decompressed refrigerant reaches the outdoor heat exchanger 107, absorbs heat in the outdoor heat exchanger 107, and turns into a low-pressure gas refrigerant. The low-pressure gas refrigerant is suctioned into the compressor 104 via the four-way switching valve 109 and the accumulator 108. During the heating operation, the indoor heat exchanger 105 functions as a radiator, and the outdoor heat exchanger 107 functions as a heat absorber.

On the other hand, during the cooling operation, the flow of the refrigerant is reversed by switching the four-way switching valve 109 as indicated by a dotted line, and the refrigerant flows in a direction indicated by an arrow of the dotted line. As a result, the high-pressure gas refrigerant discharged from the compressor 104 in the direction of arrow A passes through the four-way switching valve 109, and then enters the outdoor heat exchanger 107. The high-pressure gas refrigerant radiates heat while the high-pressure gas refrigerant turns into a high-pressure liquid refrigerant in the outdoor heat exchanger 107. The high-pressure liquid refrigerant reaches the expansion valve 106 and is decompressed by the expansion valve 106. The decompressed refrigerant reaches the indoor heat exchanger 105 via the opened liquid shutoff valve 124, absorbs heat in the indoor heat exchanger 105, and turns into a low-pressure gas refrigerant. The low-pressure gas refrigerant is suctioned into the compressor 104 via the gas shutoff valve 123 that is opened, the four-way switching valve 109, and the accumulator 108. During the cooling operation, the indoor heat exchanger 105 functions as a heat absorber, and the outdoor heat exchanger 107 functions as a radiator.

### [Refrigerant pipe]

As illustrated in FIG. 1, in refrigeration apparatus 100 of the present disclosure, the refrigerant pipe 110 includes a first pipe 111, a second pipe 112, and a third pipe 113. The refrigerant pipe 110 further includes the branch pipe 10 that connects the first pipe 111, the second pipe 112, and the third pipe 113. The first pipe 111, the second pipe 112, the third pipe 113, and the branch pipe 10 constitute a part of the refrigerant circuit 103. The first pipe 111, the second pipe 112, and the third pipe 113 are made of copper, and the branch pipe 10 is made of stainless steel. Note that, in the refrigerant pipe 110 of the present disclosure, the first pipe 111, the second pipe 112, and the third pipe 113 may be made of, for example, stainless steel, and are not limited to copper.

The first pipe 111 includes the refrigerant pipe 110 disposed inside the outdoor unit 102 and the refrigerant pipe 110 connecting the outdoor unit 102 and the branch pipe 10. The first pipe 111 includes a first liquid refrigerant pipe 111L and a first gas refrigerant pipe 111G. Liquid refrigerant flows through the first liquid refrigerant pipe 111L, and gas refrigerant flows through the first gas refrigerant pipe 111G.

The second pipe 112 is the refrigerant pipe 110 that connects the first indoor unit 101A and the branch pipe 10. The second pipe 112 includes a second liquid refrigerant pipe 112L and a second gas refrigerant pipe 112G. Liquid refrigerant flows through the second liquid refrigerant pipe 112L, and gas refrigerant flows through the second gas refrigerant pipe 112G.

The third pipe 113 is the refrigerant pipe 110 that connects the second indoor unit 101B and the branch pipe 10, and the third pipe 113 includes a third liquid refrigerant pipe 113L and a third gas refrigerant pipe 113G. Liquid refrigerant flows through the third liquid refrigerant pipe 113L, and gas refrigerant flows through the third gas refrigerant pipe 113G.

### [Branch Pipe]

As illustrated in FIG. 1, a refrigeration apparatus 100 of the present disclosure includes two branch pipes 10 (referred to as a first branch pipe 10X and a second branch pipe 10Y). Note that the refrigeration apparatus 100 of the present disclosure may include three or more branch pipes 10 in accordance with the number of indoor units 101. In the present embodiment, the branch pipe 10 is used for connecting the indoor unit 101 and the outdoor unit 102, but the use of the branch pipe 10 of the present disclosure is not limited thereto, and may be used, for example, for a branch portion of an internal pipe of the outdoor unit 102. Note that, in the present embodiment, the branch pipe 10 is used for flowing a refrigerant which is an example of a fluid, but may be used for flowing a fluid (water, nitrogen gas, or the like) other than the refrigerant.

The first branch pipe 10X connects the first liquid refrigerant pipe 111L, the second liquid refrigerant pipe 112L, and the third liquid refrigerant pipe 113L. The first branch pipe 10X branches the liquid refrigerant flowing from the first liquid refrigerant pipe 111L, and causes the liquid refrigerant to flow out to the second liquid refrigerant pipe 112L and the third liquid refrigerant pipe 113L. Further, the first branch pipe 10X joins the liquid refrigerant flowing from the second liquid refrigerant pipe 112L and the third liquid refrigerant pipe 113L and causes the liquid refrigerant to flow out to the first liquid refrigerant pipe 111L.

The second branch pipe 10Y connects the first gas refrigerant pipe 111G to the second gas refrigerant pipe 112G and the third gas refrigerant pipe 113G. The second branch pipe 10Y branches the gas refrigerant flowing in from the first gas refrigerant pipe 111G, and causes the gas refrigerant to flow out to the second gas refrigerant pipe 112G and the third gas refrigerant pipe 113G. Further, the second branch pipe 10Y joins the gas refrigerant flowing from the second gas refrigerant pipe 112G and the third gas refrigerant pipe 113G and causes the gas refrigerant to flow out to the first gas refrigerant pipe 111G.

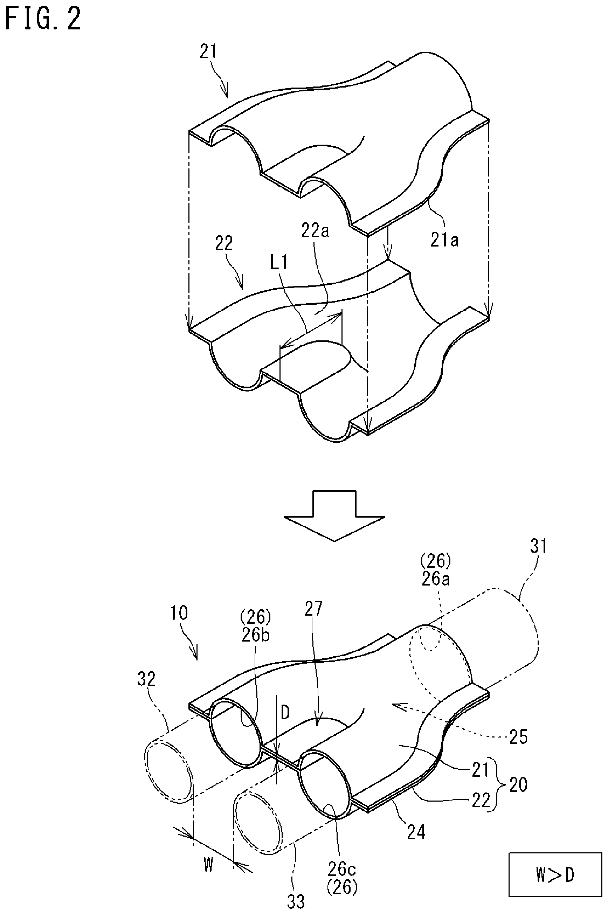

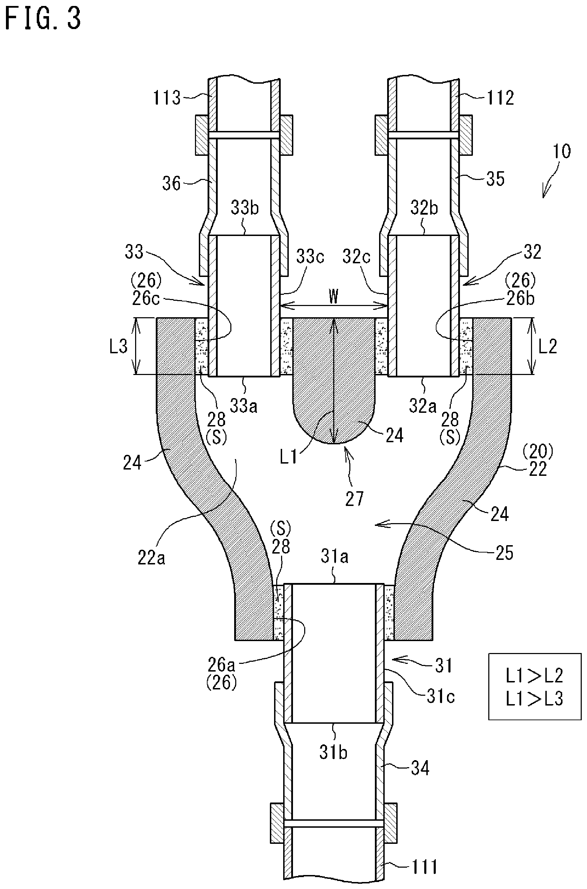

FIG. 2 is a schematic perspective view schematically illustrating a branch pipe according to an embodiment of the present disclosure. FIG. 3 is a schematic cross-sectional view illustrating a branch pipe according to an embodiment of the present disclosure. As illustrated in FIG. 2 and FIG. 3, the branch pipe 10 includes a branch pipe main body 20, a first pipe joint 31, a second pipe joint 32, and a third pipe joint 33. Note that, in FIG. 2, for convenience of explanation, illustration of some parts (a sealing portion 28, a first joint portion 34, a second joint portion 35, a third joint portion 36, and the like, which will be described later) is omitted.

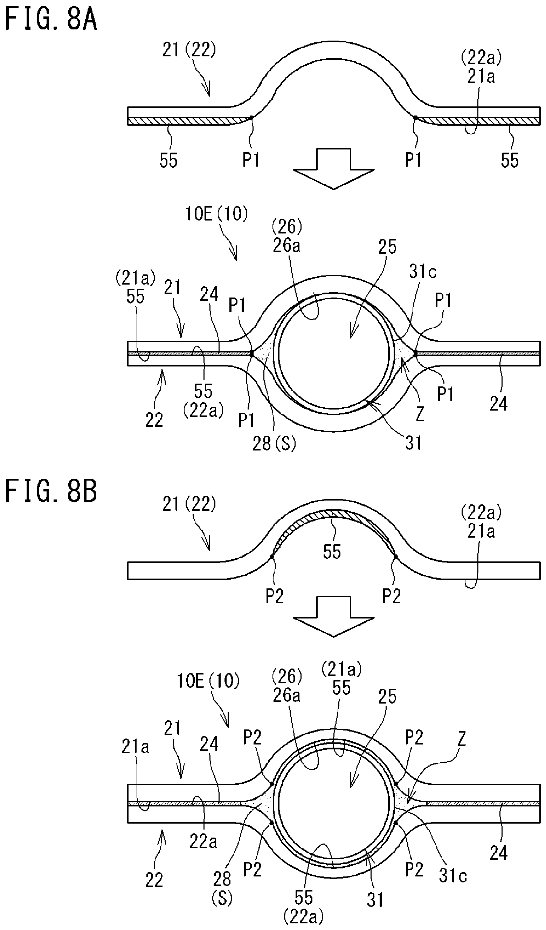

As illustrated in FIG. 2, the branch pipe main body 20 includes a first plate-shaped member 21 and a second plate-shaped member 22. The first plate-shaped member 21 and the second plate-shaped member 22 are members manufactured into a predetermined shape by pressing a stainless steel plate. The material of the first plate-shaped member 21 and the second plate-shaped member 22 is, for example, SUS304L. Note that, as will be described later, the first plate-shaped member 21 and the second plate-shaped member 22 may be further subjected to machining (for example, grinding processing, polishing processing, and the like) other than press working (see FIG. 8A and FIG. 8B).

The first plate-shaped member 21 has a first surface 21a. The first surface 21a is a surface on the inner side of the branch pipe main body 20 in the first plate-shaped member 21 assembled as the branch pipe main body 20. The second plate-shaped member 22 has a second surface 22a. The second surface 22a is a surface on the inner side of the branch pipe main body 20 in the second plate-shaped member 22 assembled as the branch pipe main body 20. The first plate-shaped member 21 and the second plate-shaped member 22 are disposed such that the first surface 21a and the second surface 22a face each other.

The branch pipe main body 20 further includes a joint portion 24. The branch pipe main body 20 is configured by joining the first plate-shaped member 21 and the second plate-shaped member 22 by the joint portion 24. The joint portion 24 of the present embodiment is a layer made of a brazing material (sheet brazing) formed between the first surface 21a and the second surface 22a. In the branch pipe main body 20 of the present embodiment, the joint portion 24 is a portion where the first surface 21a and the second surface 22a are joined by brazing, but may be a portion (bead) where an outer surface (end surface) orthogonal to the first surface 21a of the first plate-shaped member 21 and an outer surface (end surface) orthogonal to the second surface 22a of the second plate-shaped member 22 are welded (Tig welding, laser welding, or the like).

The branch pipe main body 20 further includes a flow path 25 formed between the first surface 21a and the second surface 22a. The flow path 25 is a flow path (space) through which a fluid (refrigerant (liquid refrigerant or gas refrigerant) in the present embodiment) flows. The branch pipe main body 20 has a plurality of openings 26. The plurality of openings 26 include a first opening 26a, a second opening 26b, and a third opening 26c formed by the first plate-shaped member 21 and the second plate-shaped member 22 at an end of the flow path 25 in the refrigerant flow direction. The first opening 26a, the second opening 26b, and the third opening 26c are opened in a direction not intersecting the first surface 21a and the second surface 22a. The branch pipe 10 of the present embodiment has three openings 26 (first opening 26a, second opening 26b, and third opening 26c). The first opening 26a, the second opening 26b, and the third opening 26c are formed inside a cylindrical portion formed by the first plate-shaped member 21 and the second plate-shaped member 22, respectively. Note that, in branch pipe 10 of the present disclosure, the openings 26 may be provided at three or more locations, and may be provided at four locations, for example.

As described above, in the branch pipe 10 of the present disclosure, the branch pipe main body 20 can be easily manufactured by using the first plate-shaped member 21 and the second plate-shaped member 22 manufactured by pressing (bending) a stainless steel plate and joining them. In other words, the branch pipe 10 can be manufactured by simple processing such as pressing (bending) and welding.

The branch pipe main body 20 further includes a branch portion 27. The branch portion 27 is a portion that branches the refrigerant flowing into the flow path 25 from the first opening 26a into the second opening 26b side and the third opening 26c side. Further, the branch portion 27 is also a portion (merging portion) where the refrigerant flowing into the flow path 25 from the second opening 26b and the third opening 26c merges and flows toward the first opening 26a. In the branch pipe 10 of the present embodiment, the branch portion 27 is provided at one location, but may be provided at two or more locations according to the number of locations of the opening 26.

A first end 31a of the first pipe joint 31 is inserted into the first opening 26a. A first end 32a of the second pipe joint 32 is inserted into the second opening 26b. A first end 33a of the third pipe joint 33 is inserted into the third opening 26c. The first pipe joint 31, the second pipe joint 32, and the third pipe joint 33 are furnace-brazed to the branch pipe main body 20 in the furnace.

In the branch pipe 10, leakage of the refrigerant from each gap (hereinafter referred to as a gap Z) between an outer peripheral surface 31c on the first end 31a side of the first pipe joint 31 and the first opening 26a, between an outer peripheral surface 32c on the first end 32a side of the second pipe joint 32 and the second opening 26b, and between an outer peripheral surface 33c on the first end 33a side of the third pipe joint 33 and the third opening 26c becomes a problem. Therefore, the branch pipe 10 further includes a sealing portion 28 that seals the gap Z. The form of the sealing portion 28 will be described in detail later.

The branch pipe 10 further includes a first joint portion 34 provided at a second end 31b of the first pipe joint 31, a second joint portion 35 provided at a second end 32b of the second pipe joint 32, and a third joint portion 36 provided at a second end 33b of the third pipe joint 33. The first joint portion 34, the second joint portion 35, and the third joint portion 36 are made of copper joints. The first joint portion 34, the second joint portion 35, and the third joint portion 36 made of copper can be connected to the first pipe 111, the second pipe 112, and the third pipe 113 by brazing on site. Note that, in the branch pipe 10 of the present disclosure, the first pipe joint 31, the second pipe joint 32, and the third pipe joint 33 may be made of a material other than copper, and are not limited to copper.

The branch pipe 10 constitutes a part of refrigerant pipe 110 by connecting the first joint portion 34 to the first pipe 111, connecting the second joint portion 35 to the second pipe 112, and connecting the third joint portion 36 to the third pipe 113.

### [Setting of dimensions of each part of branch pipe]

As illustrated in FIG. 2 and FIG. 3, the branch pipe 10 of the present embodiment includes a branch portion 27 formed between the second opening 26b and the third opening 26c. As illustrated in FIG. 3, in the branch pipe 10 of the present embodiment, a formation length L1 of the branch portion 27 in the axial direction of the second opening 26b and the third opening 26c is set to a length larger than an insertion margin L2 of the second pipe joint 32 in the second opening 26b and an insertion margin L3 of the third pipe joint 33 in the third opening 26c (L1 > L2, L1 > L3).

With such a configuration, the branch pipe 10 of the present embodiment can ensure pressure resistance performance that can withstand use of a refrigerant having a high pressure, and can reliably straighten the refrigerant flowing from the first pipe 111 to the second pipe 112 and the third pipe 113.

As illustrated in FIG. 2 and FIG. 3, in the branch pipe 10 of the present embodiment, the separation distance W between the second opening 26b and the third opening 26c is set to a distance larger than a thickness D of the branch portion 27 (W > D). The thickness D of the branch portion 27 is the sum of the respective thicknesses of the first plate-shaped member 21, the second plate-shaped member 22, and the joint portion 24.

With such a configuration, in the branch pipe 10 of the present embodiment, the insertion margin L2 of the second pipe joint 32 can be secured in the second opening 26b, and the insertion margin L3 of the third pipe joint 33 can be secured in the third opening 26c. As a result, the branch pipe 10 of the present embodiment can ensure pressure resistance performance that can withstand use of a natural refrigerant having a high pressure.

### [Sealing Portion]

In the branch pipe 10 of the present disclosure, a brazing material layer S that connects each of the first to third pipe joints 31 to 33 and the branch pipe main body 20 can be used as the sealing portion 28. The brazing material layer S is a layer made of a brazing material. However, when the brazing material layer S is used as the sealing portion 28, it is necessary to supply an appropriate amount of the brazing material to the gap Z, and when the amount of the brazing material is not appropriate, shrinkage cavities may occur in the brazing material layer S. Since the shrinkage cavities are portions where the refrigerant may leak, the branch pipe 10 of the present disclosure preferably adopts a configuration that suppresses the leakage of the refrigerant from the shrinkage cavities in the brazing material layer S. Therefore, the branch pipe 10 of the present disclosure is configured based on any idea of 1) sealing the gap Z using a member other than the brazing material while allowing the occurrence of shrinkage cavities in the brazing material layer S, or 2) suppressing the occurrence of shrinkage cavities by reducing the gap Z and suppressing the use amount of the brazing material in the brazing material layer S.

### [Branch Pipe According to First Embodiment]

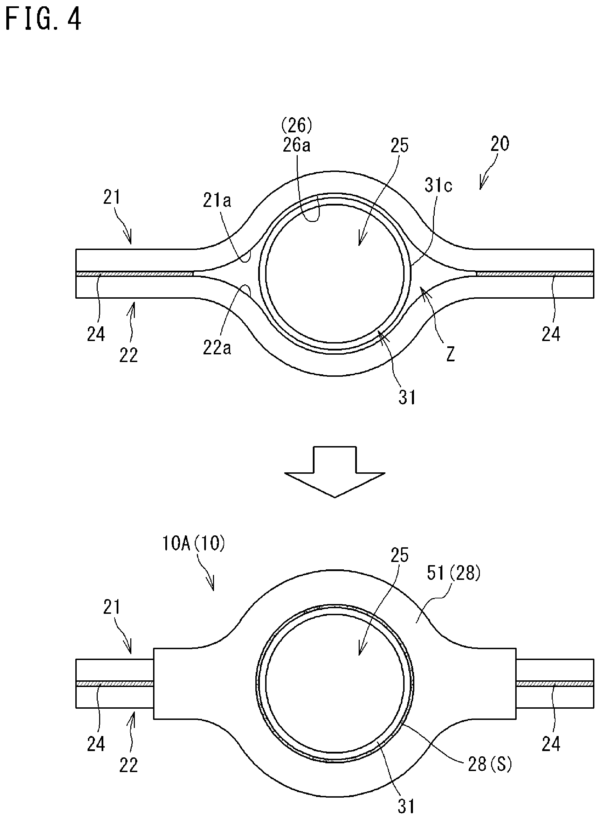

FIG. 4 is an explanatory view of a branch pipe according to a first embodiment. FIG. 4 illustrates the first embodiment of a branch pipe 10 of the present disclosure. In the present description, the branch pipe 10 according to the first embodiment is also referred to as a branch pipe 10A. As illustrated in FIG. 4, the branch pipe 10A according to the first embodiment is characterized in that an end plate 51 is provided. The upper view of FIG. 4 illustrates a state where the first opening 26a and the first pipe joint 31 are viewed from the axial direction with respect to the branch pipe main body 20 before the end plate 51 is installed. The lower view of FIG. 4 illustrates a state where the first opening 26a and the first pipe joint 31 are viewed from the axial direction with respect to the branch pipe main body 20 after the end plate 51 is installed. As illustrated in FIG. 4, the branch pipe 10A includes an end plate 51 that seals the gap Z between the first opening 26a and the first pipe joint 31. The end plate 51 is a part of the sealing portion 28. The branch pipe 10A seals the gap Z with the end plate 51 to suppress leakage of fluid (refrigerant) from the gap Z. Note that the branch pipe 10A allows the generation of shrinkage cavities in the brazing material. Therefore, in the branch pipe 10A, the gap Z need not be completely filled with the brazing material. Note that, in the branch pipe 10A, the gap Z may be completely filled with the brazing material.

As illustrated in FIG. 4, the end plate 51 is disposed at the end in the axial direction of the first opening 26a of the branch pipe main body 20. The end plate 51 is made of stainless steel. The end plate 51 is furnace-brazed to the end in the axial direction of the first opening 26a of the branch pipe main body 20 and to the first pipe joint 31.

FIG. 4 illustrates only end plate 51 disposed in first opening 26a, and illustration of end plate 51 disposed in second opening 26b and third opening 26c is omitted. In the branch pipe 10A, the end plate 51 is similarly disposed at the end in the axial direction of the second opening 26b of the branch pipe main body 20 and the end in the axial direction of the third opening 26c of the branch pipe main body 20.

In the branch pipe 10A, the end plate 51 need not be disposed in all of the first opening 26a, the second opening 26b, and the third opening 26c, and may be disposed in any one or more of the first opening 26a, the second opening 26b, and the third opening 26c. In other words, the branch pipe 10A includes the end plate 51 disposed on at least one of the end in the axial direction of the first opening 26a, the end in the axial direction of the second opening 26b, or the end in the axial direction of the third opening 26c.

In the branch pipe 10, when the entire gap Z between each of the openings 26a to 26c and each of the pipe joints 31 to 33 is filled with the brazing material, the required amount of brazing material increases, and the labor required for brazing increases (That is, brazing takes time). In the branch pipe 10A according to the first embodiment, since the gap Z is sealed by the end plate 51, it is not necessary to fill the gap Z with a brazing material. Therefore, the branch pipe 10A having the end plate 51 can suppress the use amount of the brazing material used for the sealing portion 28 and can reduce the time and effort required for brazing. Further, by reducing shrinkage cavities in the brazing material layer S, leakage of the refrigerant from the gap Z can be suppressed.

### [Branch Pipe According to Second Embodiment]

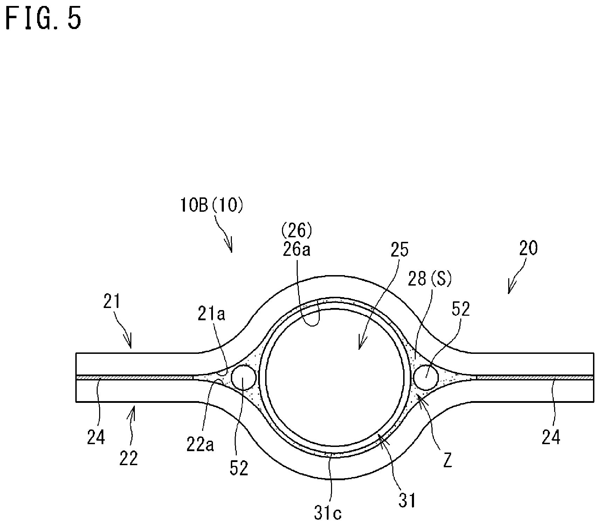

FIG. 5 is an explanatory view of a branch pipe according to a second embodiment. FIG. 5 illustrates the second embodiment of a branch pipe 10 of the present disclosure. In the present description, the branch pipe 10 according to the second embodiment is also referred to as a branch pipe 10B. As illustrated in FIG. 5, the branch pipe 10B according to the second embodiment is characterized in that it includes an insert 52. FIG. 5 illustrates a state in which the first opening 26a and the first pipe joint 31 in the branch pipe 10B are viewed from the axial direction. As illustrated in FIG. 5, the branch pipe 10B includes a sealing portion 28 that fills the gap Z between the first opening 26a and the first pipe joint 31. In the branch pipe 10B, the sealing portion 28 includes a brazing material filling the gap Z and an insert 52. The insert 52 is a part of the sealing portion 28. The branch pipe 10B can reduce shrinkage cavities in the brazing material layer S by reducing the gap Z by the insert 52 and suppressing the use amount of the brazing material, and thus leakage of the refrigerant from the gap Z can be suppressed. The insert 52 of the present embodiment is a stainless steel wire. Note that the insert 52 constituting the branch pipe 10B of the present embodiment is not limited to a stainless steel wire.

FIG. 5 illustrates only the insert 52 disposed in the first opening 26a, and illustration of the insert 52 disposed in the second opening 26b and the third opening 26c is omitted. In the branch pipe 10B of the present embodiment, the insert 52 is similarly arranged in the second opening 26b and the third opening 26c. In the branch pipe 10B, the insert 52 need not be disposed in all of the first opening 26a, the second opening 26b, and the third opening 26c, and may be disposed in any one or more of the first opening 26a, the second opening 26b, and the third opening 26c. In other words, the branch pipe 10B includes the insert 52 disposed in at least one of the first opening 26a, the second opening 26b, or the third opening 26c.

The first plate-shaped member 21 and the second plate-shaped member 22 are furnace-brazed in a state where the insert 52 is disposed in a region (gap Z) surrounded by the first plate-shaped member 21, the second plate-shaped member 22, and each of the pipe joints 31 to 33. In the branch pipe 10B according to the second embodiment, a part of the gap Z is filled with the insert 52, and the other gap Z is filled with a brazing material. The branch pipe 10B having such a configuration can reduce the amount of the brazing material required to fill the gap Z by the volume of the insert 52. Therefore, the branch pipe 10B can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

Preferably, in the branch pipe 10B of the present embodiment, the insert 52 disposed in the first opening 26a is connected to one of the insert 52 disposed in the second opening 26b and one of the insert 52 disposed in the third opening 26c. Further, preferably, in the branch pipe 10B of the present embodiment, the other of the inserts 52 arranged in the second opening 26b and the other of the inserts 52 arranged in the third opening 26c are connected. By using the insert 52 having such a configuration, the number of the insert 52 can be reduced, and the labor of brazing can be reduced. The shrinkage cavities in the brazing material layer S can be reduced, and thus leakage of the refrigerant from the gap Z can be suppressed.

### [Branch Pipe According to Third Embodiment]

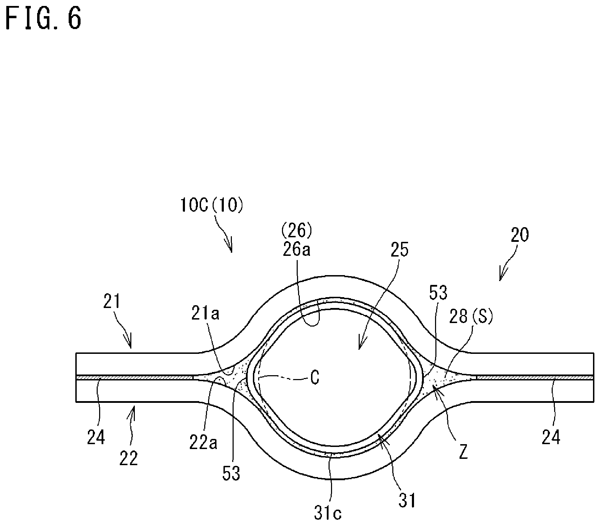

FIG. 6 is an explanatory view of a branch pipe according to a third embodiment. FIG. 6 illustrates the third embodiment of a branch pipe 10 of the present disclosure. In the present description, the branch pipe 10 according to the third embodiment is also referred to as a branch pipe 10C. As illustrated in FIG. 6, the branch pipe 10C according to the third embodiment is characterized in that the pipe joint includes a protrusion. FIG. 6 illustrates a state in which the first opening 26a and the first pipe joint 31 in the branch pipe 10C are viewed from the axial direction. As illustrated in FIG. 6, the branch pipe 10C includes a sealing portion 28 that fills the gap Z between the first opening 26a and the first pipe joint 31.

In the branch pipe 10C, the first pipe joint 31 includes a protrusion 53. The protrusion 53 is a portion that bulges the first pipe joint 31 toward the gap Z. The protrusion 53 bulges radially outward from an imaginary circle C (see FIG. 6) when the shape of the cross section orthogonal to the axial direction of the first pipe joint 31 is assumed to be a perfect circle. In other words, in the first pipe joint 31 having the protrusion 53, the shape of the cross section orthogonal to the axial direction is not a perfect circle. The branch pipe 10C can reduce shrinkage cavities in the brazing material layer S by reducing the gap Z by the protrusion 53 and suppressing the amount of the brazing material used, and thus leakage of the refrigerant from the gap Z can be suppressed.

FIG. 6 illustrates only the protrusion 53 of the first pipe joint 31, and illustration of protrusions 53 provided in the second pipe joint 32 and the third pipe joint 33 is omitted. In the branch pipe 10C, the second pipe joint 32 and the third pipe joint 33 have protrusions 53 similar to the first pipe joint 31. In the branch pipe 10C, all of the first pipe joint 31, the second pipe joint 32, and the third pipe joint 33 do not need to include the protrusion 53, and any one or more of the first pipe joint 31, the second pipe joint 32, and the third pipe joint 33 may include the protrusion 53. In other words, the branch pipe 10C includes the protrusion 53 disposed in at least one of the first pipe joint 31, the second pipe joint 32, or the third pipe joint 33.

The branch pipe 10C according to the third embodiment reduces the internal volume of the gap Z by providing the protrusion 53. Therefore, the branch pipe 10C can suppress the amount of the brazing material used for the sealing portion 28, and can reduce the time and effort required for brazing. Further, shrinkage cavities in the brazing material layer S can be suppressed, and thus leakage of the refrigerant from the gap Z can be suppressed.

### [Branch Pipe According to Fourth Embodiment]

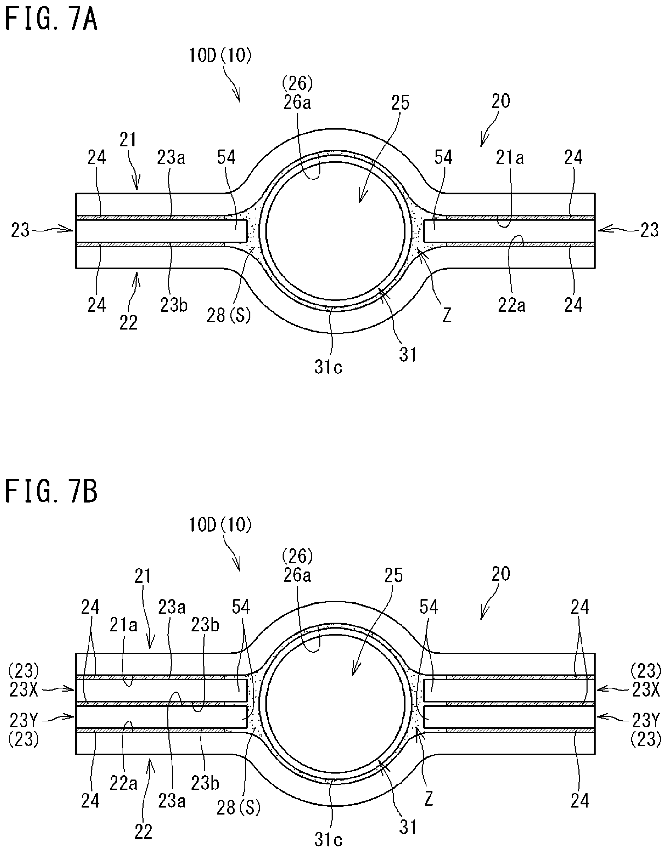

FIG. 7A and FIG. 7B are explanatory views of a branch pipe according to a fourth embodiment. FIG. 7A illustrates the fourth embodiment of a branch pipe 10 of the present disclosure. In the present description, the branch pipe 10 according to the fourth embodiment is also referred to as a branch pipe 10D. As illustrated in FIG. 7A, the branch pipe 10D according to the fourth embodiment is characterized in that a branch pipe main body 20 includes a third plate-shaped member 23. FIG. 7A illustrates a state in which the first opening 26a and the first pipe joint 31 in the branch pipe 10D are viewed from the axial direction. As illustrated in FIG. 7A, the branch pipe 10D includes a sealing portion 28 that fills the gap Z between the first opening 26a and the first pipe joint 31.

In the branch pipe 10D, the branch pipe main body 20 includes a third plate-shaped member 23. The third plate-shaped member 23 is a stainless steel plate (flat plate). The third plate-shaped member 23 has a third surface 23a facing the first surface 21a of the first plate-shaped member 21 and a fourth surface 23b facing the second surface 22a of the second plate-shaped member 22. The third surface 23a is joined to the first surface 21a by a joint portion 24. The fourth surface 23b is joined to the second surface 22a by the joint portion 24. In the branch pipe 10D, the first plate-shaped member 21 and the second plate-shaped member 22 are joined by the joint portion 24 via the third plate-shaped member 23.

In the branch pipe 10D, the third plate-shaped member 23 includes a protruding portion 54 that protrudes from the joint portion 24 to the first opening 26a. The branch pipe 10D can reduce shrinkage cavities in the brazing material layer S by reducing the gap Z by the protruding portion 54 and suppressing the use amount of the brazing material, and thus leakage of the refrigerant from the gap Z can be suppressed.

FIG. 7A illustrates only the protruding portion 54 disposed in the first opening 26a, and illustration of the protruding portion 54 disposed in the second opening 26b and the third opening 26c is omitted. In the branch pipe 10D, the third plate-shaped member 23 includes a protruding portion 54 that protrudes from the joint portion 24 to the second opening 26b and a protruding portion 54 that protrudes from the joint portion 24 to the third opening 26c. In the branch pipe 10D, the protruding portion 54 need not be disposed in all of the first opening 26a, the second opening 26b, and the third opening 26c, and may be disposed in any one or more of the first opening 26a, the second opening 26b, and the third opening 26c. In other words, the branch pipe 10D includes the protruding portion 54 disposed in at least one of the first opening 26a, the second opening 26b, or the third opening 26c.

The branch pipe 10D according to the fourth embodiment reduces the internal volume of the gap Z by providing the protruding portion 54. Therefore, the branch pipe 10D can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

Note that the branch pipe 10D may have a configuration illustrated in FIG. 7B. FIG. 7B illustrates a modification of the branch pipe 10D according to the fourth embodiment. As illustrated in FIG. 7B, the modification of the branch pipe 10D according to the fourth embodiment is characterized in that the branch pipe main body 20 includes a plurality of (two in the present embodiment) third plate-shaped members 23 (third plate-shaped members 23X and 23Y).

As illustrated in FIG. 7B, in the modification of the branch pipe 10D, the branch pipe main body 20 includes two third plate-shaped members 23. The third surface 23a of one third plate-shaped member 23X is joined to the first surface 21a by a joint portion 24. The fourth surface 23b of the one third plate-shaped member 23X is joined to the third surface 23a of the other third plate-shaped member 23Y by a joint portion 24. The fourth surface 23b of the other third plate-shaped member 23Y is joined to the second surface 22a by a joint portion 24. In the modification of the branch pipe 10D, the first plate-shaped member 21 and the second plate-shaped member 22 are joined by the joint portion 24 via the two third plate-shaped members 23X and 23Y.

In the modification of the branch pipe 10D according to the fourth embodiment, since the two third plate-shaped members 23 are provided, the ratio of the volume of the protruding portion 54 to the internal volume of the gap Z can be further increased, and thus the internal volume of the gap Z is further reduced as compared with the branch pipe 10D illustrated in FIG. 7A. Therefore, according to the modification of the branch pipe 10D, the amount of the brazing material used for the sealing portion 28 can be more greatly suppressed, and the labor required for brazing can be reduced. Further, shrinkage cavities in the brazing material layer S can be suppressed, and thus leakage of the refrigerant from the gap Z can be suppressed. Note that the number of third plate-shaped members 23 constituting a modification of the branch pipe 10D may be 3 or more.

### [Branch Pipe According to Fifth Embodiment]

FIG. 8A and FIG. 8B are explanatory views of a branch pipe according to a fifth embodiment. FIG. 8A illustrates the fifth embodiment of a branch pipe 10 of the present disclosure. In the present description, the branch pipe 10 according to the fifth embodiment is also referred to as a branch pipe 10E. As illustrated in FIG. 8A, the branch pipe 10E according to the fifth embodiment is characterized in that a branch pipe main body 20 includes a machined portion 55. FIG. 8A illustrates a state in which the first opening 26a and the first pipe joint 31 in the branch pipe 10E are viewed from the axial direction. As illustrated in FIG. 8A, the branch pipe 10E includes a sealing portion 28 that fills the gap Z between the first opening 26a and the first pipe joint 31.

In the branch pipe 10E, the first plate-shaped member 21 and the second plate-shaped member 22 include a machined portion 55. In the branch pipe main body 20 illustrated in FIG. 8A, the machined portion 55 is formed on the flat plate portions of the first plate-shaped member 21 and the second plate-shaped member 22.

The machined portion 55 is a portion obtained by further performing machining (cutting in the present embodiment) on the first plate-shaped member 21 and the second plate-shaped member 22 formed by pressing a stainless steel plate (flat plate) or the like, and changing the shapes of parts of the first surface 21a and the second surface 22a. The machined portion 55 of the present embodiment is a portion obtained by cutting the first plate-shaped member 21 and the second plate-shaped member 22 and removing a part thereof to change the shapes of the first surface 21a and the second surface 22a. Note that the machined portion 55 may be a portion partially removed by machining (for example, grinding processing, polishing processing, and the like) other than cutting.

In the branch pipe 10E, when the first opening 26a is viewed from the axial direction, the machined portion 55 becomes a new first surface 21a of the first plate-shaped member 21 and a new second surface 22a of the second plate-shaped member 22. In the branch pipe 10E, the branch pipe main body 20 is configured by joining the first surface 21a (machined portion 55) and the second surface 22a (machined portion 55) by the joint portion 24.

When the machined portion 55 is not provided (see, for example, the upper view of FIG. 4), the shape of the first opening 26a when viewed from the axial direction is a shape (first shape) in which a change in the tangential direction is continuous. On the other hand, as illustrated in FIG. 8A, in the branch pipe 10E including the machined portion 55, the shape of the first opening 26a (machined portion 55) when viewed from the axial direction is a shape (second shape) having inflection points P1 at which a change in a tangential direction is discontinuous. The branch pipe 10E including this (second shape) can reduce the internal volume of the gap Z as compared with the branch pipe 10 including the (first shape). The branch pipe 10E can reduce shrinkage cavities in the brazing material layer S by reducing the gap Z and suppressing the amount of the brazing material used by the machined portion 55, and thus leakage of the refrigerant from the gap Z can be suppressed.

FIG. 8A illustrates only the machined portion 55 provided around the first opening 26a, and illustration of the machined portion 55 provided around the second opening 26b and the third opening 26c is omitted. The branch pipe 10E includes a machined portion 55 similar to the first opening 26a around the second opening 26b and around the third opening 26c. In the branch pipe 10E, the machined portion 55 need not be disposed in all of the first opening 26a, the second opening 26b, and the third opening 26c, and the machined portion 55 may be provided in any one or more of the first opening 26a, the second opening 26b, and the third opening 26c. In other words, the branch pipe 10E includes the machined portion 55 disposed in at least one of the first opening 26a, the second opening 26b, or the third opening 26c.

In the branch pipe 10E according to the fifth embodiment, the inner volume of the gap Z is reduced by providing the machined portion 55. Therefore, the branch pipe 10E can suppress the use amount of the brazing material used for the sealing portion 28 and reduce the time and effort required for brazing. Further, shrinkage cavities in the brazing material layer S can be suppressed, and thus leakage of the refrigerant from the gap Z can be suppressed.

Note that the branch pipe 10E may have a configuration illustrated in FIG. 8B. FIG. 8B illustrates a modification of the branch pipe 10E according to the fifth embodiment. As illustrated in FIG. 8B, the modification of the branch pipe 10E according to the fifth embodiment is characterized in that the machined portion 55 is formed in an arc (curved) portion of the first plate-shaped member 21 and the second plate-shaped member 22.

As illustrated in FIG. 8B, in a modification of the branch pipe 10E according to the fifth embodiment, the machined portion 55 is formed in an arc (curved) portion. In the branch pipe 10E according to the modification, the machined portion 55 is a part of the first surface 21a of the first plate-shaped member 21 and a part of the second surface 22a of the second plate-shaped member 22.

In the branch pipe 10E according to the modification, the machined portion 55 when the first opening 26a is viewed from the axial direction has a shape (third shape) having inflection points P2 at which a change in a tangential direction is discontinuous. The branch pipe 10E including this (third shape) can reduce the internal volume of the gap Z as compared with the branch pipe 10 including the (first shape). Therefore, the branch pipe 10E according to the modification can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

### [Functional effects of embodiments]

(1) The branch pipe 10 of the above embodiment is a branch pipe that connects a first pipe 111, a second pipe 112, and a third pipe 113, and includes a branch pipe main body 20 configured to include a first plate-shaped member 21 made of stainless steel and having a first surface 21a, and a second plate-shaped member 22 made of stainless steel and having a second surface 22a disposed opposite to the first surface 21a. The branch pipe main body 20 includes a joint portion 24 that joins the first plate-shaped member 21 and the second plate-shaped member 22, a flow path 25 formed between the first surface 21a and the second surface 22a, and a first opening 26a, a second opening 26b, and a third opening 26c which are formed by the first plate-shaped member 21 and the second plate-shaped member 22 at an end in a flow direction of the refrigerant in the flow path 25 and communicate with the first pipe 111, the second pipe 112, and the third pipe 113, respectively.

With the branch pipe 10 having the above configuration, the branch pipe 10 made of stainless steel can be obtained by subjecting a stainless steel plate to simple processing.

(2) The branch pipe 10 of the present embodiment further includes a first pipe joint 31 including a first joint portion 34 connectable to the first pipe 111 at a first end 31a in an axial direction and having a second end 31b in the axial direction connected to the first opening 26a, a second pipe joint 32 including a second joint portion 35 connectable to the second pipe 112 at a first end 32a in the axial direction and having a second end 32b in the axial direction connected to the second opening 26b, and a third pipe joint 33 including a third joint portion 36 connectable to the third pipe 113 at a first end 33a in the axial direction and having a second end 33b in the axial direction connected to the third opening 26c. In the branch pipe 10, the joint portion 24 includes a branch portion 27 formed between the second opening 26b and the third opening 26c, and a formation length L1 of the branch portion 27 in an outflow direction of the refrigerant flowing through the second opening 26b and the third opening 26c is larger than an insertion margin L2 of the second pipe joint 32 in the second opening 26b and an insertion margin L3 of the third pipe joint 33 in the third opening 26c (L1 > L2, L1 > L3).

With the branch pipe 10 having the above configuration, pressure resistance performance can be secured, and the fluid (refrigerant) flowing from the first pipe 111 to the second pipe 112 and the third pipe 113 can be reliably straightened.

(3) In the branch pipe 10 of the present embodiment, the separation distance W between the second opening 26b and the third opening 26c is larger than a thickness D of the branch portion 27 (W > D).

With the branch pipe 10 having the above configuration, the insertion margins L2 and L3 of the second pipe joint 32 and the third pipe joint 33 can be secured in the second opening 26b and the third opening 26c.

(4) The branch pipe 10 of the present embodiment further includes a sealing portion 28 that seals a gap Z between an outer peripheral surface 31c of the first pipe joint 31 and the first opening 26a, a gap Z between an outer peripheral surface 32c of the second pipe joint 32 and the second opening 26b, and a gap Z between an outer peripheral surface 33c of the third pipe joint 33 and the third opening 26c.

With the branch pipe 10 having the above configuration, the branch pipe 10 made of stainless steel can be obtained by subjecting a stainless steel plate to simple processing.

(5) In the branch pipe 10 of the present embodiment, the sealing portion 28 includes the brazing material layer S that connects the branch pipe main body 20 to the first pipe joint 31, the second pipe joint 32, and the third pipe joint 33.

With the branch pipe 10 having the above configuration, leakage of the refrigerant from the gap Z can be suppressed by the brazing material layer S that connects the branch pipe main body 20 and each of the pipe joints 31 to 33.

(6) In the branch pipe 10A of the form illustrated in FIG. 4, the sealing portion 28 includes an end plate 51 disposed on at least one of an end in an axial direction of the first opening 26a, an end in the axial direction of the second opening 26b, or an end in the axial direction of the third opening 26c.

With the branch pipe 10A having the above configuration, by sealing the gap Z with the end plate 51, the amount of the brazing material used for sealing the gap Z can be suppressed, and leakage of the refrigerant from the gap Z can be suppressed by the end plate 51.

(7) In the branch pipe 10B of the form illustrated in FIG. 5, the sealing portion 28 includes an insert 52 disposed in at least one of the gap Z between the first opening 26a and the first pipe joint 31, the gap Z between the second opening 26b and the second pipe joint 32, or the gap Z between the third opening 26c and the third pipe joint 33.

With the branch pipe 10B having the above configuration, the gap Z can be reduced by configuring the sealing portion 28 to include the insert 52 other than the brazing material, whereby the amount of the brazing material used for sealing the gap Z can be suppressed, and leakage of the refrigerant from the gap Z can be suppressed by reducing shrinkage cavities in the brazing material layer S.

(8) The branch pipe 10C in the form illustrated in FIG. 6 includes a protrusion 53 formed in at least one of the first pipe joint 31, the second pipe joint 32, or the third pipe joint 33 and bulging toward the gap Z.

With the branch pipe 10C having the above configuration, the gap Z can be reduced by the protrusion 53, whereby the amount of the brazing material used for sealing the gap Z can be suppressed, and leakage of the refrigerant from the gap Z can be suppressed by reducing shrinkage cavities in the brazing material layer S.

(9) In the branch pipe 10D of the form illustrated in FIG. 7A and FIG. 7B, the branch pipe main body 20 further includes a third plate-shaped member 23, and the first surface 21a and the second surface 22a are joined to each other via the third plate-shaped member 23 at the joint portion 24. In the branch pipe 10D, the third plate-shaped member 23 includes a protruding portion 54 that protrudes from the joint portion 24 to at least one of the first opening 26a, the second opening 26b, or the third opening 26c.

In the branch pipe 10D having the above configuration, the gap Z can be reduced by the protruding portion 54, whereby the amount of the brazing material used for sealing the gap Z can be suppressed, and leakage of the refrigerant from the gap Z can be suppressed by reducing shrinkage cavities in the brazing material layer S.

(10) In the branch pipe 10E in the form illustrated in FIG. 8A and FIG. 8B, at least one of the first opening 26a, the second opening 26b, or the third opening 26c includes a machined portion 55 subjected to machining, and the machined portion 55 when viewed from the axial direction has inflection points P1 and P2 at which a change in a tangential direction is discontinuous.

In the branch pipe 10E having the above configuration, the gap Z can be reduced by providing the machined portion 55, whereby the amount of the brazing material used for sealing the gap Z can be suppressed, and leakage of the refrigerant from the gap Z can be suppressed by reducing shrinkage cavities in the brazing material layer S.

(11) In the branch pipe 10 of the above embodiment, the first pipe 111, the second pipe 112, and the third pipe 113 are refrigerant pipes 110 through which a single refrigerant made of carbon dioxide or a mixed refrigerant containing carbon dioxide flows.

The branch pipe 10 having the above configuration can be used as the refrigerant pipe 110 for a single refrigerant made of carbon dioxide having a higher pressure than that of the conventional refrigerant or for a mixed refrigerant containing carbon dioxide.

(12) The refrigeration apparatus 100 of the present disclosure includes a branch pipe 10.

According to the refrigeration apparatus 100 of the present embodiment, the branch pipe 10 obtained by subjecting a stainless steel plate to simple processing can be used to easily configure the refrigeration apparatus 100 including the refrigerant circuit 103 having a higher pressure than a conventional refrigerant circuit.

While various embodiments have been described herein above, it is to be appreciated that various changes in form and detail may be made without departing from the spirit and scope presently or hereafter claimed.

### REFERENCE SIGNS LIST

- 10: Branch Pipe
- 20: Branch pipe main body
- 21: First plate-shaped member
- 21a: First surface
- 22: Second plate-shaped member
- 22a: Second surface
- 23: Third plate-shaped member
- 24:: Joint portion
- 25: Flow path
- 26a: First opening
- 26b: Second opening
- 26c: Third opening
- 27: Branch portion
- 28: Sealing portion
- 31: First pipe joint
- 31a: First end
- 31b: Second end
- 32: Second pipe joint
- 32a: First end
- 32b: Second end
- 33: Third pipe joint
- 33a: First end
- 33b: Second end
- 34: First joint portion
- 35: Second joint portion
- 36: Third joint portion
- 51: End plate
- 52: Insert
- 53: Protrusion
- 54: Protruding portion
- 55: Machined portion
- 100: Refrigeration apparatus
- 110: Refrigerant pipe
- 111: First pipe
- 112: Second pipe
- 113: Third pipe
- S: Brazing material layer
- Z: Gap
- L1: Formation length (of branch portion)
- L2: Insertion margin (at second opening)
- L3: Insertion margin (at third opening)
- W: Separation distance
- D: Thickness (of branch portion)

## Claims

1. A branch pipe (10) that connects a first pipe (111), a second pipe (112), and a third pipe (113) and branches a fluid flowing through the first pipe (111) into the second pipe (112) and the third pipe (113), the branch pipe comprising:
a branch pipe main body (20) configured to include a first plate-shaped member (21) made of stainless steel and having a first surface (21a), and a second plate-shaped member (22) made of stainless steel and having a second surface (22a) disposed opposite to the first surface (21a), wherein
the branch pipe main body (20) includes:
a joint portion (24) that joins the first plate-shaped member (21) and the second plate-shaped member (22);
a flow path (25) formed between the first surface (21a) and the second surface (22a); and
a first opening (26a), a second opening (26b), and a third opening (26c) which are formed by the first plate-shaped member (21) and the second plate-shaped member (22) at an end in a flow direction of the fluid in the flow path (25) and communicate with the first pipe (111), the second pipe (112), and the third pipe (113), respectively.

2. The branch pipe (10) according to claim 1, further comprising:
a first pipe joint (31) including a first joint portion (34) connectable to the first pipe (111) at a first end (31a) in an axial direction and having a second end (31b) in the axial direction connected to the first opening (26a);
a second pipe joint (32) including a second joint portion (35) connectable to the second pipe (112) at a first end (32a) in the axial direction and having a second end (32b) in the axial direction connected to the second opening (26b); and
a third pipe joint (33) including a third joint portion (36) connectable to the third pipe (113) at a first end (33a) in the axial direction and having a second end (33b) in the axial direction connected to the third opening (26c), wherein
the joint portion (24) includes a branch portion (27) formed between the second opening (26b) and the third opening (26c), and
a formation length (L1) of the branch portion (27) in an outflow direction of the fluid flowing through the second opening (26b) and the third opening (26c) is larger than an insertion margin (L2) of the second pipe joint (32) in the second opening (26b) and an insertion margin (L3) of the third pipe joint (33) in the third opening (26c).

3. The branch pipe (10) according to claim 2, wherein a separation distance (W) between the second opening (26b) and the third opening (26c) is larger than a thickness (D) of the branch portion (27).

4. The branch pipe (10) according to claim 1 or 2, wherein
the branch pipe main body (20) further includes
a sealing portion (28) that seals a gap (Z) between an outer peripheral surface (31c) of the first pipe joint (31) and the first opening (26a), a gap (Z) between an outer peripheral surface (32c) of the second pipe joint (32) and the second opening (26b), and a gap (Z) between an outer peripheral surface (33c) of the third pipe joint (33) and the third opening (26c).

5. The branch pipe (10) according to claim 4, wherein
the sealing portion (28) includes
a brazing material layer (S) that connects the branch pipe main body (20) and the first pipe joint (31), the second pipe joint (32), and the third pipe joint (33).

6. The branch pipe (10A) according to claim 4, wherein
the sealing portion (28) includes
an end plate (51) disposed on at least one of an end in an axial direction of the first opening (26a), an end in the axial direction of the second opening (26b), or an end in the axial direction of the third opening (26c).

7. The branch pipe (10B) according to claim 5, wherein
the sealing portion (28) includes
an insert (52) disposed in at least one of the gap (Z) between the outer peripheral surface (31c) of the first pipe joint (31) and the first opening (26a), the gap (Z) between the outer peripheral surface (32c) of the second pipe joint (32) and the second opening (26b), or the gap (Z) between the outer peripheral surface (33c) of the third pipe joint (33) and the third opening (26c).

8. The branch pipe (10C) according to claim 5, wherein at least one of the first pipe joint (31), the second pipe joint (32), or the third pipe joint (33) includes a protrusion (53) bulging toward the gap (Z).

9. The branch pipe (10D) according to claim 5, wherein
the branch pipe main body (20) further includes a third plate-shaped member (23),
the first surface (21a) and the second surface (22a) are joined to each other via the third plate-shaped member (23) at the joint portion (24), and
the third plate-shaped member (23) includes a protruding portion (54) that protrudes from the joint portion (24) to at least one of the first opening (26a), the second opening (26b), or the third opening (26c).

10. The branch pipe (10E) according to claim 5, wherein
at least one of the first opening (26a), the second opening (26b), or the third opening (26c) includes
a machined portion (55) subjected to machining, and
the machined portion (55) when viewed from the axial direction has inflection points (P1, P2) at which a change in a tangential direction is discontinuous.

11. The branch pipe (10) according to claim 1 or 2, wherein
the first pipe (111), the second pipe (112), and the third pipe (113)
are refrigerant pipes (110) through which a single refrigerant made of carbon dioxide or a mixed refrigerant containing carbon dioxide flows.

12. A refrigeration apparatus (100) comprising the branch pipe (10) according to claim 1 or 2.
